# EUROPÄISCHE PATENTSCHRIFT

(11) **EP 2 303 653 B1**
(45) Veröffentlichungstag und Bekanntmachung des Hinweises auf die Patenterteilung: **12.08.2015**
(21) Anmeldenummer: 09765537.7
(22) Anmeldetag: 04.06.2009
(51) Int. Cl.: B60T 8/36

(54) **DRUCKSTEUERVENTILANORDNUNG MIT MEMBRANVENTILEN ZUR STEUERUNG EINES FLUIDDRUCKS IN EINER ABS-BREMSANLAGE EINES FAHRZEUGS MIT IN EINEM KUNSTSTOFF-GEHÄUSETEIL EINSTÜCKIG INTEGRIERTEM VENTILSITZ**
PRESSURE CONTROL VALVE ARRANGEMENT HAVING DIAPHRAGM VALVES FOR CONTROLLING A FLUID PRESSURE IN AN ABS BRAKE SYSTEM OF A VEHICLE, HAVING A VALVE SEAT INTEGRATED IN A UNIPARTITE FASHION IN A PLASTIC HOUSING PART
AGENCEMENT DE VANNES DE COMMANDE DE PRESSION AVEC VANNES À MEMBRANE DESTINÉES À COMMANDER LA PRESSION D'UN FLUIDE DANS UN SYSTÈME DE FREINAGE AVEC ABS D'UN VÉHICULE, AVEC SIÈGE DE SOUPAPE FABRIQUÉ D'UNE PIÈCE DANS UN CORPS EN MATIÈRE PLASTIQUE

(30) Priorität: 17.06.2008 DE 102008028440
(43) Veröffentlichungstag der Anmeldung: 06.04.2011
(73) Patentinhaber: KNORR-BREMSE Systeme für Nutzfahrzeuge GmbH, 80809 München (DE)
(72) Erfinder: EIDENSCHINK, Rainer, 81927 München (DE); GERBER, Wilfried, 82538 Geretsried (DE); ROHN, Wolfgang, 81247 München (DE)
(74) Vertreter: Schönmann, Kurt
(86) Internationale Anmeldenummer: PCT/EP2009/003994
(87) Internationale Veröffentlichungsnummer: WO 2009/152957

(56) Entgegenhaltungen:
- EP-A- 0 498 584
- WO-A-2008/034525
- DE-A1- 2 517 571
- DE-A1- 2 938 437
- DE-A1- 3 906 548
- DE-A1- 10 156 773

## Beschreibung

Die Erfindung betrifft eine Drucksteuerventilanordnung zur Steuerung des Fluiddrucks in einer ABS-Bremsanlage eines Fahrzeugs gemäß dem Oberbegriff von Anspruch 1.

ABS (Antiblockiersystem) verhindert ein Blockieren der Räder und tritt in Funktion, wenn zwischen einem Reifen und der Fahrbahn ein größerer Kraftschluss beansprucht wird, als übertragbar ist, d.h. wenn durch den Fahrer überbremst wird. Bei Überbremsung erkennt das zentrale elektronische Steuergerät der ABS-Bremsanlage aus Drehzahlfühlersignalen die Blockierneigung eines oder mehrerer Räder und berechnet daraus die Ansteuerung der auf den zugeordneten Bremszylinder einwirkenden Drucksteuerventilanordnung. Der Bremsdruck wird dann mittels der Drucksteuerventilanordnung durch Senken, Halten oder Aufbauen nach Maßgabe des Radverhaltens und damit der Reibungsverhältnisse zwischen Reifen und Fahrbahn auf einen optimalen Schlupf eingestellt.

Eine Drucksteuerventilanordnung einer ABS-Bremsanlage ist aus der DE 101 56 773 A1 bekannt. Für ABS-Bremsanlagen von Fahrzeugen werden meist Einkanal-Drucksteuerventile mit und ohne Relaiswirkung verwendet. Drucksteuerventilanordnungen mit Relaiswirkung werden in Sattelaufliegern und Deichselanhängern verwendet. ABS-Drucksteuerventilanordnungen ohne Relaiswirkung, auf welche sich die vorliegende Erfindung bezieht, finden bei allen anderen Fahrzeugen Verwendung, beispielsweise bei Nutzfahrzeugen, Omnibussen, Sattelzugmaschinen wie auch bei Anhängern. Drucksteuerventilanordnungen ohne Relaiswirkung verfügen über 3/2-Wege-Magnetventile als Vorsteuerventile von Membranventilen, wobei eine elektronische Steuereinrichtung die 3/2-Wege-Magnetventile ansteuert, um die für den ABS-Betrieb notwendigen Funktionen "Druckhalten", "Druckabbau" und "Druckaufbau" durchführen zu können. Während einer Bremsung ohne Ansprechen des ABS (keine Blockierneigung eines Rades) durchströmt das Druckmittel, meist Luft beim Be- und Entlüften der Bremszylinder die Drucksteuerventilanordnungen ungehindert in beiden Richtungen. Damit ist sichergestellt, dass die Funktion der Betriebsbremsanlage nicht durch die ABS-Drucksteuerventilanordnung beeinflusst wird.

Eine gattungsgemäße Drucksteuerventilanordnung einer ABS-Bremsanlage ist in der DE 29 38 437 A1 beschrieben. Dort weist die Drucksteuerventilanordnung ein mehrteiliges Gehäuse auf, mit einem Gehäuseoberteil, einem Gehäuseunterteil und einer aus zwei miteinander verklebten oder verschweißten Einzelplatten bestehenden Zwischenplatte. Im Gehäuseunterteil sind magnetbetätigte Vorsteuerventile und im Gehäuseoberteil druckbetätigte Hauptventile angeordnet. An eine der beiden Einzelplatten der Zwischenplatte sind Ventilsitze der Vorsteuerventile einstückig angeformt.

Der Erfindung liegt die Aufgabe zugrunde, eine Drucksteuerventilanordnung der eingangs erwähnten Art derart weiter zu bilden, dass sie einfacher zu fertigen und zu montieren ist.

Diese Aufgabe wird erfindungsgemäß durch die Merkmale von Anspruch 1 gelöst.

### Offenbarung der Erfindung

Die Erfindung basiert auf dem Gedanken, dass
a) die Ventilsitze der elektromagnetischen Steuerventile mit einem Gehäuseteil in Form einer einzigen Zwischenplatte einstückig ausgebildet sind, welche durch einen Kunststoff-Spritzgussformling gebildet wird,
b) die die Ventilsitze ausbildende einzige Zwischenplatte einem Öffnungen für die Membranen aufweisenden Gehäuseteil und einem anderen Gehäuseteil zwischengeordnet ist, in welchem die Bauelemente der elektromagnetischen Steuerventile mit Ausnahme der in der einzigen Zwischenplatte ausgebildeten Ventilsitze aufgenommen sind, wobei
c) das Gehäuse der Drucksteuerventilanordnung ausschließlich aus dem einen Gehäuseteil, der einzigen Zwischenplatte und dem anderen Gehäuseteil besteht, und
d) das andere Gehäuseteil ein Kunststoff-Spritzgussformling ist, in welchen die Magnetspulen der elektromagnetischen Steuerventile eingespritzt sind.

Die Ventilsitze brauchen dann nach dem Urformen zusammen mit dem Gehäuseteil dann nicht mehr weiter-, beispielsweise spanabhebend bearbeitet werden, da die Oberflächengüte bzw. -rauhigkeit eines spritzgegossenen Kunststoffs die an einen solchen Ventilsitz gestellten Dichtigkeitsanforderungen hinreichend erfüllen. Damit werden Ventilsitze bildende Einsätze als zusätzliche Bauteile hinfällig, was in einer vorteilhaften Reduzierung der Anzahl der Bauelemente der Drucksteuerventilanordnung resultiert und damit die Herstellund Montagekosten vorteilhaft niedriger ausfallen.

Das andere, die weiteren Bauelemente der elektromagnetischen Steuerventile aufnehmende Gehäuseteil ist erfindungsgemäß ein Kunststoff-Spritzgussformling, in welchen die Magnetspulen des elektromagnetischen Steuerventils eingespritzt sind. Durch diese Maßnahme wird der Fertigungs- und Montageaufwand der Drucksteuerventilanordnung weiter gesenkt.

Demgegenüber werden bei einem Drucksteuerventil gemäß DE 39 06 548 A1 die Spulen der Vorsteuermagnetventile mittels einer Vergussmasse in ein Gehäuseteil des Drucksteuerventils eingegossen, welches bereits zuvor hergestellt wurde und dann als Gussform für die Vergussmasse dient.

Durch die in den Unteransprüchen aufgeführten Maßnahmen sind vorteilhafte Weiterbildungen und Verbesserungen der in Anspruch 1 angegebenen Erfindung möglich.

Gemäß besonders zu bevorzugender Maßnahmen ist das die Ventilsitze aufweisende Gehäuseteil ein plattenförmiger, faserverstärkter Kunststoff-Spritzgussformling, wobei das Gehäuseteil beispielsweise aus faserverstärktem Polyamid besteht. Ein solcher Kunststoff weist eine relativ hohe Festigkeit, Steifigkeit und Härte auf, weshalb er sich für die im Rahmen des ABS-Ventilbetriebs notwendige Dauerbelastung eignet.

Insbesondere sind die Ventilsitze an einer Fläche des Gehäuseteils ausgebildet, welche einem anderen Gehäuseteil zugewandt ist, in dem die weiteren Bauelemente der elektromagnetischen Steuerventile untergebracht sind, welche jeweils einen Anker, eine Spule und einen Magnetkern umfassen. Dann können funktionsfähige elektromagnetische Steuerventile auf einfache Weise dadurch erhalten werden, dass das andere, die weiteren Bauelemente der elektromagnetischen Steuerventile aufnehmende Gehäuseteil mit dem einen Gehäuseteil verbunden wird, an welchem die Ventilsitze ausgebildet sind.

Gemäß einer Weiterbildung ist das andere Gehäuseteil mit wenigstens einer Durchgangsbohrung zum Einsetzen der weiteren Bauelemente der elektromagnetischen Steuerventile versehen, wobei jeweils eine Mittelachse der Durchgangsbohrungen koaxial in Bezug zum betreffenden Ventilsitz angeordnet ist. Die Durchgangsbohrungen in dem anderen Gehäuseteil können dann durch einen Deckel verschlossen sein.

Alle wesentlichen Bauelemente der elektromagnetischen Steuerventile wie das eine Gehäuseteil mit den Ventilsitzen und das andere Gehäuseteil zur Aufnahme der weiteren Bauelementen der elektromagnetischen Steuerventile können dann von einer einzigen Montagerichtung her, vorzugsweise vertikal und von oben montiert werden, was den Vorteil hat, dass während der Montage nicht umgespannt werden muss.

Weitere die Erfindung verbessernde Maßnahmen werden nachstehend gemeinsam mit der Beschreibung eines bevorzugten Ausführungsbeispiels der Erfindung anhand der Zeichnung näher dargestellt. In der Zeichnung zeigt
- Fig. 1: eine Prinzipdarstellung einer ABS-Bremsanlage als allgemeines Schema eines 4S/4K-ABS-Bremsanlage eines Fahrzeugs,
- Fig. 2a: eine schematische Darstellung einer einen Bremszylinder ansteuernden Drucksteuerventilanordnung im geöffneten Zustand (Druckaufbau),
- Fig. 2b: eine schematische Darstellung der Drucksteuerventilanordnung von Figur 2a im geschlossenen Zustand (Druckabbau),
- Fig.3: eine Querschnittsdarstellung einer konkreten Ausführung der Drucksteuerventilanordnung von Fig.2a und Fig.2b gemäß einer bevorzugten Ausführungsform der Erfindung;
- Fig.4: eine Querschnittsdarstellung entlang der Linie IV-IV von Fig.3.

### Beschreibung des Ausführungsbeispiels

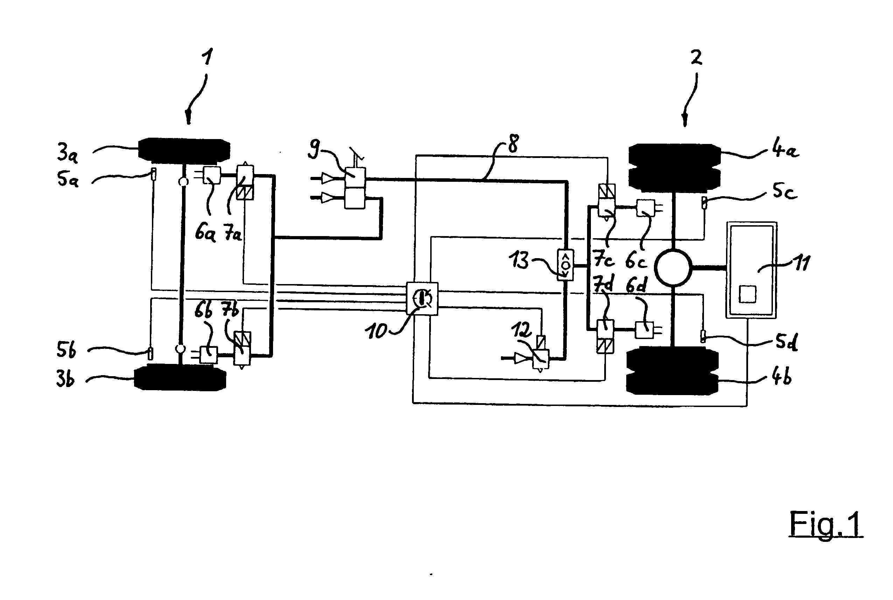

Gemäß Fig. 1 weist ein mit einer ABS-Bremsanlage ausgestattetes Fahrzeug eine Vorderachse 1 sowie eine Hinterachse 2 auf. An der Vorderachse 1 sind Räder 3a und 3b angeordnet; die Hinterachse 2 weist beispielsweise jeweils mit Zwillingsbereifung ausgestattete Räder 4a und 4b auf. Die zur Bremsung dieser Räder 3a, 3b und 4a, 4b dienende ABS-Bremsanlage ist hier nach Art einer 4S/4K-Anlage (vier Sensoren, vier Kanäle) ausgebildet. Dies bedeutet, dass hier insgesamt vier Drehzahlsensoren 5a-5d sowie vier Drucksteuerventilanordnungen 7a-7d zur Verfügung stehen. Die Drucksteuerventilanordnungen 7a-7d dienen der Ansteuerung von jeweils zugeordneten Bremszylindern 6a-6d. Über eine sich verzweigende pneumatische Bremsdruckleitung 8 stehen alle Drucksteuerventilanordnungen 7a-7d mit einem Fußbremsventil 9 in Verbindung.

Der Fahrer erzeugt bei Betätigung des Fußbremsventils 9 einen Bremsdruck, der über die pneumatische Bremsdruckleitung 8 die Drucksteuerventilanordnungen 7a-7d passierend an die den Rädern 3a,3b sowie den Rädern 4a,4b zugeordneten Bremszylindern 6a-6d weitergeleitet wird.

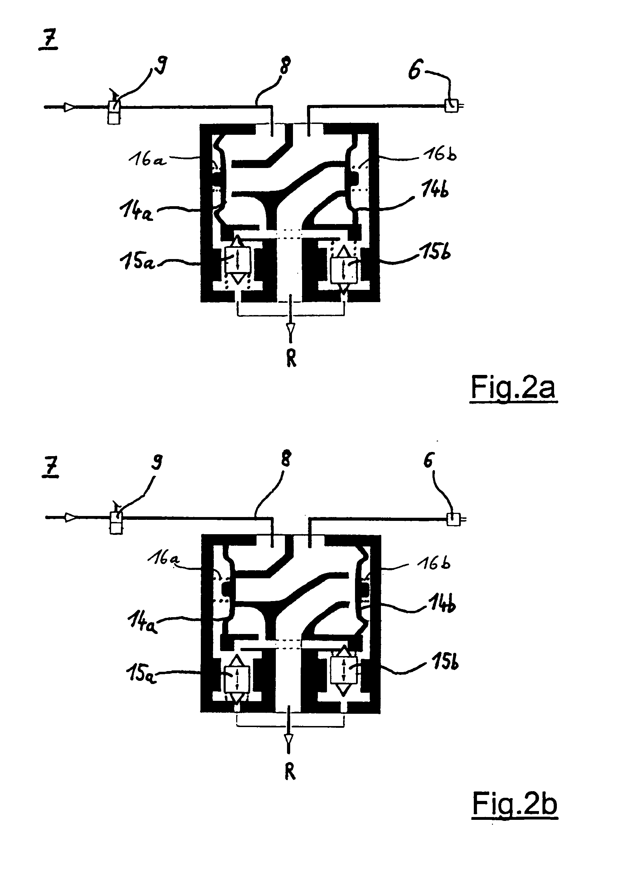

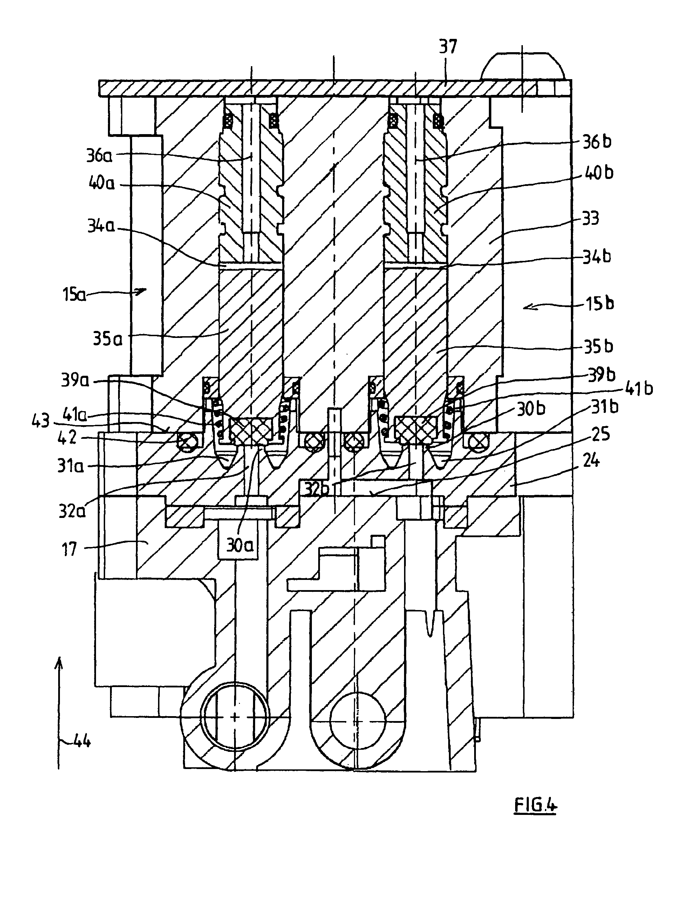

Die Drucksteuerventilanordnungen 7a-7d sind über integrierte, in Fig.2a, Fig.2b und Fig.4 gezeigte Elektromagnetventile 15a, 15b ansteuerbar und sind zu diesem Zwecke mit einer zentralen elektronischen Steuereinheit 10 elektrisch verbunden. Eingangsseitig steht die elektronische Steuereinheit 10 mit den vier die Radgeschwindigkeiten ermittelnden Drehzahlsensoren 5a-5b in Verbindung. Im Falle des Blockierens eines Rades 3a-3d wird entsprechend einer ABS-Regelung nach Maßgabe der elektronischen Steuereinheit 10 der vom Fahrer über das Fußbremsventil 9 eingesteuerte Bremsdruck durch die entsprechende Drucksteuerventilanordnung 7a-7d soweit herabgesetzt, bis das Blockieren beseitigt ist. Die ABS-Bremsanlage des vorliegenden Ausführungsbeispiels umfasst weiterhin eine ASR-Funktion, welche eine ASR-Einheit 11 zum Reduzieren des Motormoments wie ein ASR-Magnetventil 12 und ein Wechselventil 13 umfasst.

Die gemäß Figur 2a im Rahmen der ABS-Bremsanlage zum Zwecke der ABS-Regelung eingesetzte Drucksteuerventilanordnung 7 ist hier nach Art einer 1-Kanal-Drucksteuerventilanordnung aufgebaut und besteht im Wesentlichen aus zwei integrierten Membranventilen 14a und 14b und zwei diese ansteuernden, federbelasteten Elektromagnetventilen 15a, 15b. Die Membranventile 14a und 14b sind jeweils durch Federelemente 16a, 16b in Schließrichtung belastet und werden über die jeweils zugeordneten Elektromagnetventile 15a und 15b vorgesteuert.

Die Drucksteuerventilanordnung 7 ist in Fig.2a in seiner Offenstellung gezeigt, bei der ein Druckaufbau zum angeschlossenen Bremszylinder 6 erfolgt. Hierbei wird keines der Magnetventile 15a und 15b elektrisch angesteuert. In der gezeigten Stellung drückt die vom Fußbremsventil 9 kommende Druckluft das als Einlassventil ausgebildete Membranventil 14a auf. Durch das normal geschlossene Elektromagnetventil 15a wird verhindert, dass das zugeordnete Membranventil 14a wieder verschlossen wird. Durch das normal geöffnete zweite Elektromagnetventil 15b verschließt der vom Fußbremsventil 9 kommende Bremsdruck das als Auslassventil dienende zweite Membranventil 14b. Somit durchläuft die Druckluft ungehindert die Drucksteuerventilanordnung 7. In diesem Zustand befindet sich die Drucksteuerventilanordnung 7 auch dann, wenn keine ABS-Regelung erfolgt.

Zum Konstanthalten des Bremsdrucks in einem Bremszylinder 6a bis 6d ist lediglich das Elektromagnetventil 15a zu bestromen, wodurch dieses öffnet und infolgedessen der vom Fußbremsventil 9 kommende Bremsdruck das einlassseitige Membranventil 14a zudrückt. Nun ist der Druck auf der rechten und linken Seite des Membranventils 14a gleich groß. Da aber die Wirkfläche auf der linken Seite des Membranventils 14a größer ist, wird das Membranventil 14a geschlossen. Entsprechendes gilt für das über das Elektromagnetventil 15b angesteuerte auslassseitige Membranventil 14b. Die Drucksteuerventilanordnung 7 verschließt zum Konstanthalten des Drucks also die vom Fußbremsventil 9 zum Bremszylinder 6 verlaufende pneumatische Bremsdruckleitung 8.

Gemäß Figur 2b wird ein Druckabbau in einem Bremszylinder 6a bis 6d dadurch erzielt, dass beide Elektromagnetventile 15a und 15b bestromt werden. Für das Elektromagnetventil 15a und das zugeordnete einlassseitige Membranventil 15a gilt das vorstehend zum Druckhalten Beschriebene. Hingegen ist das andere Elektromagnetventil 15b wegen der Bestromung geschlossen. Deshalb drückt der vom Bremszylinder 6 kommende Druck das auslassseitige Membranventil 14b auf und der Bremszylinder 6 wird entlüftet.

Die vorstehend beschriebenen Funktionen der Drucksteuerventilanordnung 7 werden nach Maßgabe der elektronischen Steuereinheit 10 im Rahmen einer ABS/ASR-Regelung im eingangs beschriebenen Sinne durchgeführt.

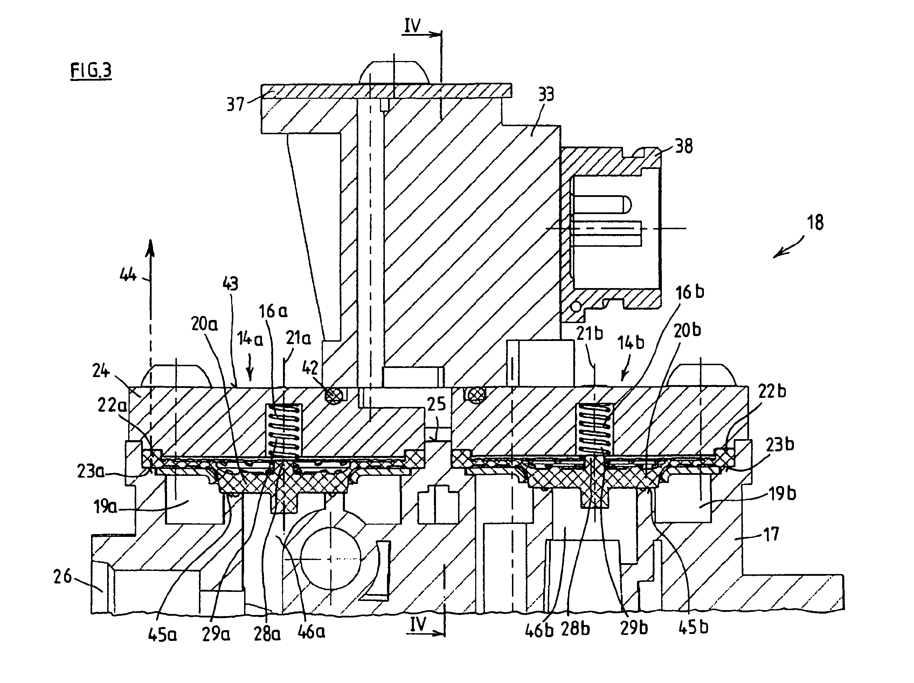

In Fig.3 und Fig.4 ist die in Fig.2a und Fig.2b lediglich schematisch dargestellte Drucksteuerventilanordnung 7 in einer konkreten Ausführungsform in Einbaulage gezeigt, d.h. oben dargestellte Bauteile befinden sich oben. Bei dieser Ausführungsform sind die beiden Elektromagnetventile 15a, 15b zum Vorsteuern der Membranventile 14a, 14b in einem Doppelmagnetventil zusammengefasst, dessen Funktion jedoch analog zu Einzelventilen 15a, 15b ist.

An einer in Fig.3 und Fig.4 oberen Fläche eines unteren Gehäuseteils 17 eines Gehäuses 18 der Drucksteuerventilanordnung 7 sind zwei nebeneinander angeordnete Öffnungen 19a, 19b zum Einsetzen oder Einlegen von Membranen 20a, 20b der Membranventile 14a, 14b vorgesehen. Die Mittelachsen 21 a, 21 b der Öffnungen 19a, 19b sind dabei parallel zueinander und vertikal ausgerichtet. Die Membranen 20a, 20b wirken jeweils mit einem Membranventilsitz 45a, 45b zusammen, wobei durch eine Membran 20a, 20b ein Strömungsquerschnitt eines Fluidkanals 46a, 46b freigegeben oder verschlossen wird, je nachdem ob die Membran 20a, 20b auf dem Membranventilsitz 45a, 45b aufsitzt oder von diesem abgehoben ist.

Die Membranränder 22a, 22b der Membranen 20a, 20b sind zwischen Öffnungsrändern 23a, 23b der Öffnungen 19a, 19b und einem weiteren Gehäuseteil 24 des Gehäuses 18 der Drucksteuerventilanordnung 7 gehalten, wobei die Öffnungsränder 23a, 23b der Öffnungen 19a, 19b bevorzugt in einer gemeinsamen Ebene liegen und die gedachten Flächennormalen der Öffnungsränder 23a, 23b der Öffnungen 19a, 19b, deren Richtung in Fig.3 und Fig.4 durch den Pfeil 44 verdeutlicht ist, in die gleiche Richtung weisen, hier nach oben. Alternativ könnten die Öffnungsränder 23a, 23b der Öffnungen 19a, 19b auch in parallelen Ebenen liegen, was im vorliegenden Fall bedeuten würde, dass sie gemäß Fig.3 vertikal versetzt angeordnet sind.

Die Membrane 20a, 20b werden vorzugsweise aus einem Elastomer wie beispielsweise NBR durch Urformen hergestellt, wobei sie nach dem Entnehmen aus der Form gegebenenfalls durch an- oder eingespritzte Dichtungen miteinander verbunden sind.

Das weitere Gehäuseteil 24 besteht beispielsweise in einer Zwischenplatte, welche eine obere, die Öffnungen 19a, 19b für die Membrane 20a, 20b aufweisende Fläche 25 des unteren Gehäuseteils 17 kontaktiert und an dem unteren Gehäuseteil 17 befestigt ist, bevorzugt durch Verschraubung mit diesem.

In dem die Öffnungen 19a, 19b für die Membrane 20a, 20b aufweisenden, in Fig.3 und Fig.4 unteren Gehäuseteil 17 sind sämtliche Schraubanschlüsse für an die Drucksteuerventilanordnung 7 anzuschließende Fluidleitungen ausgebildet, wobei dieses untere Gehäuseteil 17 durch einen Leichtmetall-Spritzgussformling gebildet wird. Besonders bevorzugt besteht das untere Gehäuseteil 17 aus einem Aluminium-Druckgussbauteil. Exemplarisch ist in Fig.3 einer dieser Schraubanschlüsse 26 dargestellt. Diese Schraubanschlüsse 26 sind vorzugsweise direkt, d.h. ohne Vorsehen von Gewindeeinsätzen in dem unteren Gehäuseteil gefertigt, beispielsweise durch Gewindeschneiden.

Die Membrane 20a, 20b der Membranventile 14a, 14b belastenden Federelemente 16a, 16b sind einerseits zentral an den Membranen 20a, 20b , beispielsweise durch von den Membranen 20a, 20b weg ragende Zentrierzapfen 28a 28b und andererseits an der Zwischenplatte 24 abgestützt. Die Zwischenplatte 24 ist zur wenigstens teilweisen Aufnahme der Federelemente 16a, 16b mit zu dem unteren Gehäuseteil 17 weisenden Sacklochbohrungen 29a, 29b versehen. Die Federelemente 16a, 16b sind beispielsweise Schraubenfedern mit vorzugsweise vertikalen Federmittelachsen, so dass die Bewegungs- oder Wirkrichtung der Membranen 20a, 20b parallel zur einer später noch zu erläuternden Montagerichtung sind. Somit werden die Federelemente 16a, 16b bei der Montage der Zwischenplatte 24 sowohl an dem unteren Gehäuseteil 17 als auch an der Zwischenplatte 24 automatisch zentriert und in ihrer Einbaulage fxiert.

Besonders bevorzugt wird die Zwischenplatte 24 durch einen Kunststoff-Spritzgussformling aus beispielsweise Polyamid gebildet, wobei Ventilsitze 30a, 30b der Elektromagnetventile 15a, 15 mit der Zwischenplatte 24 einstückig ausgebildet sind. Wie insbesondere aus Fig.4 hervorgeht, sind die Ventilsitze 30a, 30b dadurch kegelfömig ausgebildet, dass die die Ventilsitze 30a, 30b aufweisende Fläche 43 der Zwischenplatte 24 mit ringförmigen Sacklochausnehmungen 31 a, 31 b versehen ist. Im Bereich der Ventilsitze 30a, 30b münden im Mündungsbereich vertikal verlaufende Fluidkanäle 32a, 32b.

Die die Ventilsitze 30a, 30b ausbildende Zwischenplatte 24 ist dem unteren, die Schraubanschlüsse 26 und die Öffnungen 19a, 19b für die Membranen 20a, 20b aufweisenden Gehäuseteil 17 und einem in Fig.3 und Fig.4 oberen Gehäuseteil 33 zwischengeordnet, in welchem die Bauelemente der Elektromagnetventile 15a, 15 mit Ausnahme der in der Zwischenplatte 24 ausgebildeten Ventilsitze 30a, 30b aufgenommen sind. Die Ventilsitze 30a, 30b der beiden Elektromagnetventile 15a, 15b sind an der zum oberen Gehäuseteil 33 weisenden Fläche 43 der Zwischenplatte 24 ausgebildet.

Bevorzugt ist das obere Gehäuseteil 33 mit zwei Durchgangsbohrungen 34a, 34b zum Einsetzen von Bauteilen der Elektromagnetventile 15a, 15b wie ihren Ankern 35a, 35b und Magnetkernen 36a, 36b versehen, wobei die Mittelachsen 36a, 36b der Durchgangsbohrungen 34a, 34b parallel zu den Flächennormalen der Öffnungsränder 23a, 23b der Öffnungen 19a, 19b in dem unteren Gehäuseteil 17 angeordnet sind, die in Richtung des Pfeils 44 weisen. Weiterhin sind die Mittelachsen 36a, 36b der Durchgangsbohrungen 34a, 34b koaxial in Bezug zu den Ventilsitzen 30a, 30b angeordnet.

Die Durchgangsbohrungen 34a, 34b des oberen Gehäuseteils 33 werden durch einen Deckel 37 verschlossen, der bevorzugt ein Stanzteil aus Stahlblech ist. Weiterhin ist das obere Gehäuseteil 33 beispielsweise ein Kunststoff-Spritzgussformling, in welchen die beiden in den Figuren nicht sichtbaren Magnetspulen der Elektromagnetventile 15a, 15b eingespritzt sind. Durch das am oberen Gehäuseteil 33 angeordnete Steckkontaktgehäuse 38 können die Magnetspulen der Elektromagnetventile 15a, 15b von der elektronischen Steuereinheit 10 angesteuert werden.

In den Durchgangsbohrungen 34a, 34b des oberen Gehäuseteils 33 sind die Anker 35a, 35b der Elektromagnetventile 15a, 15b vertikal, d.h. parallel zu den Flächennormalen 44 der Öffnungsränder 23a, 23b der Öffnungen 19a, 19b für die Membrane 20a, 20b beweglich geführt, wobei an den zu den Ventilsitzen 30a, 30b weisenden Enden beispielsweise Schließelemente 39a, 39b aus einem Elastomer angeordnet sind. Abhängig von der Bestromung der Magnetspulen der Elektromagnetventile 15a, 15b nehmen die Anker 35a, 35b daher eine vertikale Lage ein, in welcher die Schließelemente 39a, 39b die Ventilsitze 30a, 30b kontaktieren und damit den entsprechenden Fluidkanal 32a, 32b verschließen oder in welcher sie von den Ventilsitzen 30a, 30b abgehoben sind und somit einen Strömungsquerschnitt freigeben. Der Hub der Anker 35a, 35b wird durch die in die Durchgangsbohrungen 34a, 34b von oben her eingesetzte und dort fixierte Magnetkerne 40a, 40b begrenzt. Durch einerseits an den Ankern 35a, 35b und andererseits am oberen Gehäuse 33 abgestützte Federelemente 41 a, 41 b werden die Anker 35a, 35b in Richtung auf die Ventilsitze 30a, 30b vorgespannt.

Besonders bevorzugt besteht das Gehäuse 18 der Drucksteuerventilanordnung 7 lediglich oder ausschließlich aus drei Gehäuseteilen, nämlich dem unteren Gehäuseteil 17, der Zwischenplatte 24 und dem oberen Gehäuseteil 33. Diese drei Gehäuseteile 17, 24 und 33 sind beispielsweise miteinander verschraubt, wobei fluidführende Kanäle an Trennebenen der Gehäuseteile durch Dichtungen 42 abgedichtet sind.

Die Drucksteuerventilanordnung 7 wird dann mit wenigstens folgenden, in einer einzigen, hier vertikalen Montagerichtung erfolgenden Schritten, hier bevorzugt von oben her, montiert, ohne dass ein Umspannen notwendig ist:
a) Urformen der Membrane 20a, 20b der beiden Membranventile 14a, 14b, wobei die Membrane 20a, 20b gegebenenfalls durch an- oder eingespritzte Dichtungen miteinander verbunden sind,
b) Fertigen der Ventilsitze 30a, 30b der Elektromagnetventile 15a, 15b in der Zwischenplatte 24 in der Fläche 43, welche zu dem oberen Gehäuseteil 33 weist,
c) Fertigen der Durchgangsbohrungen 34a, 34b in dem oberen Gehäuseteil 33 des Gehäuses 18 zur Aufnahme von Bauelementen der Elektromagnetventile 15a, 15b wie den Ankern 35a, 35b und den Magnetkernen 40a, 40b, wobei die Mittelachsen 36a, 36b der Durchgangsbohrungen 34a, 34b parallel zu den Flächennormalen 44 der Öffnungsränder 23a, 23b der Öffnungen 19a, 19b in dem unteren Gehäuseteil 17 sind,
d) Anordnen bzw. Spannen des unteren Gehäuseteils 17 derart, dass die Flächennormalen 44 der Öffnungsränder 23a, 23b der Öffnungen 19a, 19b nach oben weisen,
e) Einlegen der Membranen 20a, 20b der Membranventile 14a, 14b von oben her in die Öffnungen 19a, 19b des unteren Gehäuseteils 17 derart, dass die Membranränder 22a, 22b auf den Öffnungsrändern 23a, 23b aufliegen,
f) gegebenenfalls Entfernen der die Membrane 20a, 20b verbindenden anoder eingespritzte Dichtungen,
g) Aufbringen der Federelemente 16a, 16b auf die Membrane 20a, 20b bzw. Einbringen der Federelemente 16a, 16b in die Sacklochbohrungen 29a, 29b der Zwischenplatte 24,
h) Aufbringen der Zwischenplatte 24 auf das untere Gehäuseteil 17 derart, dass einerseits die Membranränder 22a, 22b zwischen dem unteren Gehäuseteil 17 und der Zwischenplatte 24 geklemmt bzw. gekontert und andererseits die Federelemente 16a, 16b an den Membranen 20a, 20b und der Zwischenplatte 24 abgestützt sind,
i) Einsetzen der Bauelemente der Elektromagnetventile 15a, 15b wie beispielsweise der Anker 35a, 35b und der Magnetkerne 40a, 40b in die Durchgangsbohrungen 34a, 34b des oberen Gehäuseteils 33 bevorzugt von unten her,
j) Aufbringen des oberen Gehäuseteils 33 auf die Zwischenplatte 24 von oben her, derart, dass die Ventilsitze 30a, 30b in der Zwischenplatte 24 mit den Ankern 35a, 35b der Elektromagnetventile 15a, 15b zusammenwirken können.

### Bezugszeichenliste

- 1: Vorderachse
- 2: Hinterachse
- 3: Rad
- 4: Rad
- 5: Drehzahlsensor
- 6: Bremszylinder
- 7: Drucksteuerventilanordnung
- 8: Bremsdruckleitung
- 9: Fußbremsventil
- 10: Steuereinheit
- 11: ASR-Einheit
- 12: ASR-Magnetventil
- 13: Wechselventil
- 14: Membranventil
- 15: Elektromagnetventil
- 16: Federelement
- 17: unteres Gehäuseteil
- 18: Gehäuse
- 19: Öffnungen
- 20: Membrane
- 21: Mittelachsen
- 22: Membranränder
- 23: Öffnungsränder
- 24: Zwischenplatte
- 25: Fläche
- 26: Schraubanschluss
- 28: Zentrierzapfen
- 29: Sacklochbohrung
- 30: Ventilsitze
- 31: Sacklochausnehmungen
- 32: Fluidkanäle
- 33: oberes Gehäuseteil
- 34: Durchgangsbohrungen
- 35: Anker
- 36: Mittelachse
- 37: Deckel
- 38: Steckkontaktgehäuse
- 39: Schließelemente
- 40: Magnetkerne
- 41: Federelemente
- 42: Dichtungen
- 43: Fläche
- 44: Flächennormale
- 45: Membranventilsitz
- 46: Fluidkanal

## Patentansprüche

1. Drucksteuerventilanordnung (7) zur Steuerung des Fluiddrucks in einer ABS-Bremsanlage eines Fahrzeugs derart, dass während einer Blockierneigung einzelner Räder (3a,3b;4a,4b) des Fahrzeugs der Bremsdruck in zugeordneten Bremszylindern (6a bis 6d) adaptiv anpassbar ist, wobei in einem Gehäuse (18) der Drucksteuerventilanordnung (7) wenigstens zwei durch Federelemente (16a, 16b) belastete Membrane (20a, 20b) aufweisende Membranventile (14a, 14b) sowie wenigstens zwei von einer elektronischen Steuereinrichtung (10) ansteuerbare elektromagnetische Steuerventile (15a, 15b) zum Vorsteuern der Membranventile (14a, 14b) vorgesehen sind, wobei
a) die Ventilsitze (30a, 30b) der elektromagnetischen Steuerventile (15a, 15b) mit einem Gehäuseteil in Form einer einzigen Zwischenplatte (24) einstückig ausgebildet sind,
b) die die Ventilsitze (30a, 30b) ausbildende einzige Zwischenplatte (24) einem Öffnungen (19a, 19b) für die Membranen (20a, 20b) aufweisenden Gehäuseteil (17) und einem anderen Gehäuseteil (33) zwischengeordnet ist, in welchem die Bauelemente der elektromagnetischen Steuerventile (15a, 15b) mit Ausnahme der in der einzigen Zwischenplatte (24) ausgebildeten Ventilsitze (30a, 30b) aufgenommen sind, wobei
c) das Gehäuse (18) der Drucksteuerventilanordnung (7) ausschließlich aus dem einen Gehäuseteil (17), der einzigen Zwischenplatte (24) und dem anderen Gehäuseteil (33) besteht, **dadurch gekennzeichnet, dass**
d) die Zwischenplatte durch einen Kunststoff-Spritzgussformling gebildet ist, und dass
e) das andere Gehäuseteil (33) ein Kunststoff-Spritzgussformling ist, in welchen die Magnetspulen der elektromagnetischen Steuerventile (15a, 15b) eingespritzt sind und an welchem ein Steckkontaktgehäuse (38) zur Ansteuerung der Magnetspulen der elektromagnetischen Steuerventile (15a, 15b) angeordnet ist.

2. Drucksteuerventilanordnung nach Anspruch 1, **dadurch gekennzeichnet, dass** die die Ventilsitze (30a, 30b) aufweisende Zwischenplatte (24) ein plattenförmiger, faserverstärkter Kunststoff-Spritzgussformling ist.

3. Drucksteuerventilanordnung nach Anspruch 2, **dadurch gekennzeichnet, dass** die Zwischenplatte (24) aus faserverstärktem Polyamid besteht.

4. Drucksteuerventilanordnung nach einem der vorhergehenden Ansprüche, **dadurch gekennzeichnet, dass** die Ventilsitze (30a, 30b) der elektromagnetischen Steuerventile (15a, 15b) kegelig ausgebildet und in der Zwischenplatte (24) ausgebildete zentrale Fluidkanäle (32a, 32b) begrenzen.

5. Drucksteuerventilanordnung nach einem der vorhergehenden Ansprüche, **dadurch gekennzeichnet, dass** die Ventilsitze (30a, 30b) an einer Fläche der Zwischenplatte (24) ausgebildet ist, welche dem anderen Gehäuseteil (33) zugewandt ist, in dem die weiteren Bauelemente der elektromagnetischen Steuerventile (15a, 15b) untergebracht sind, welche jeweils einen Anker (35a, 35b), eine Spule und einen Magnetkern (40a, 40b) umfassen.

6. Drucksteuerventilanordnung nach Anspruch 5, **dadurch gekennzeichnet, dass** das andere, die weiteren Bauelemente (35a, 35b) der elektromagnetischen Steuerventile (15a, 15b) aufnehmende Gehäuseteil (33) mit der Zwischenplatte (24) verbunden ist, an welcher die Ventilsitze (30a, 30b) ausgebildet sind.

7. Drucksteuerventilanordnung nach Anspruch 5 oder 6, **dadurch gekennzeichnet, dass** das andere Gehäuseteil (33) mit Durchgangsbohrungen (34a, 34b) zum Einsetzen der weiteren Bauelemente der elektromagnetischen Steuerventile (15a, 15b) versehen ist, wobei jeweils eine Mittelachse (36a, 36b) einer Durchgangsbohrung (34a, 34b) koaxial in Bezug zum betreffenden Ventilsitz (30a, 30b) angeordnet ist.

8. Drucksteuerventilanordnung nach Anspruch 7, **dadurch gekennzeichnet, dass** die Durchgangsbohrungen (34a, 34b) in dem anderen Gehäuseteil (33) durch einen Deckel (37) verschlossen sind.

9. Drucksteuerventilanordnung nach einem der vorhergehenden Ansprüche, **dadurch gekennzeichnet, dass** sie eine einkanalige Drucksteuerventilanordnung ist.

## Claims

1. Pressure control valve assembly (7) for control of the fluid pressure in an ABS brake systems of a vehicle in such a way that in case that individual wheels (3a, 3b ; 4a, 4b) of the tend to lock, the braking pressure in associated brake cylinders (6a to 6d) can be adaptively adjusted, wherein, within a housing (18) of the pressure control valve assembly (7), at least two diaphragm valves (14a, 14b) comprise diaphragms (20a, 20b) loaded by spring elements (16a, 16b) as well as at least two electromagnetic control valves (15a, 15b) are provided, which are controllable by an electronic controller (10) for pilot control of said diaphragm valves (14a, 14b), wherein
a) the valve seats (30a, 30b) of said electromagnetic control valves (15a, 15b) are configured integrally with a housing part in the form of a single intermediary plate (24),
b) said single intermediary plate (24), which forms said valve seats (30a, 30b), is interposed between a housing part (17) provided with openings (19a, 19b) for said diaphragms (20a, 20b) and another housing part (33) in which the components of said electromagnetic control valves (15a, 15b) are accommodated, with the exception of said valve seats (30a, 30b) formed in said single intermediary plate (24), and wherein
c) said housing (18) of the pressure control valve assembly (7) consists exclusively of said first housing part (17), said single intermediary plate (24) and said other housing part (33), **characterized in**
d) **that** said intermediary plate is constituted by an injection-moulded plastic part, and
e) said other housing part (33) is an injection-moulded plastic part into which the electromagnetic coils of said electromagnetic control valves (14a, 15b) are injected and on which a plus contact housing (38) is disposed for control of said electromagnetic coils of said electromagnetic control valves (15a, 15b).

2. Pressure control valve assembly according to Claim 1, **characterised in that** said intermediary plate (24), which includes said valve seats (301, 30b), is an injection-moulded part of fibre-reinforced resin.

3. Pressure control valve assembly according to Claim 2, **characterised in that** said intermediary plate (24) consists of fibre-reinforced polyamide.

4. Pressure control valve assembly according to any of the preceding Claims, **characterised in that** said valve seats (30a, 30b) of said electromagnetic control valves (15a, 15b) present a conical configuration and define central fluid passages (32a, 32b) formed in said intermediary plate (24).

5. Pressure control valve assembly according to any of the preceding Claims, **characterised in that** said valve seats (30a, 30b) are formed at a surface of said intermediary plate (24), which faces said other housing part (33), wherein the other components of said electromagnetic control valves (15a, 15b) are accommodated, whereof each comprises a respective armature (35a, 35b), a respective coil and a respective magnetic core (40a, 40b).

6. Pressure control valve assembly according to Claim 5, **characterised in that** the other housing part (33), which accommodates said other components of said electromagnetic control valves (15a, 15b), is connected to said intermediary plate (24) on which said valve seats (30a, 30b) are formed.

7. Pressure control valve assembly according to Claim 5 or 6, **characterised in that** said other housing part (33) is provided with through-holes (34a, 34b) for the insertion of said other components of said electromagnetic control valves (15a, 15b), wherein a respective central axis (36a, 36b) of a through-hole (34a, 34b) is arranged coaxially relative to the respective valve seat (30a, 30b).

8. Pressure control valve assembly according to Claim 7, **characterised in that** said through-holes (34a, 34b) in said other housing part (33) are closed by a cover (37).

9. Pressure control valve assembly according to any of the preceding Claims, **characterised in that** it constitutes a pressure control valve assembly provided with a single passage.

## Revendications

1. Ensemble de vannes de commande de pression (7) à commander la pression d'un fluide dans un système de freinage à ABS d'un véhicule d'une telle façon, qu'au cas d'une tendance au blocage des roues individuelles (3a, 3b; 4a, 4b) du véhicule, on puisse adapter la pression de freinage dans des cylindres de frein affectés (6a à 6d) de manière adaptive, dans lequel, au dedans un carter (18) dudit ensemble de vannes de commande de pression (7), au moins deux soupapes à membrane (14a, 14b) comprennent des membranes (20a, 20b) chargées par des éléments de ressort (16a, 16b) ainsi qu'au moins deux vannes de commande électromagnétiques (15a, 15b) sont conçus, qui sont apte à être commandé par un dispositif de commande électronique (10) pour le pilotage desdites soupapes à membrane (14a, 14b), dans lequel
a) les sièges de soupape (30a, 30b) desdites vannes de commande électromagnétiques (15a, 15b) sont formé en une seule pièce avec une partie dudit carter sous forme d'une seule plaque intermédiaire (24),
b) ladite seule plaque intermédiaire (24), qui forme lesdites sièges de soupape (30a, 30b), est interposée entre une partie de carter (17) munie des ouvertures (19a, 19b) pour lesdites membranes (20a, 20b) et une autre partie de carter (33), dans laquelle les composants desdites vannes de commande électromagnétiques (15a, 15b) sont reçus, sauf lesdites sièges de soupape (30a, 30b) formées dans ladite seule plaque intermédiaire (24), et dans lequel
c) ledit carter (18) de l'ensemble de vannes de commande de pression (7) est constitué exclusivement par ladite première partie de carter (17), ladite seule plaque intermédiaire (24) et ladite autre partie de carter (33), **caractérisé en ce**
d) **que** ladite plaque intermédiaire est formée par un corps moulé par injection en matière plastique, et
e) ladite autre partie de carter (33) est un corps moulé par injection en matière plastique, dans lequel les bobines électromagnétiques desdites vannes de commande électromagnétiques (14a, 15b) sont injectées et à laquelle un carter de contacts mâles (38) est disposé pour la commande desdites bobines électromagnétique desdites vannes de commande électromagnétiques (15a, 15b).

2. Ensemble de vannes de commande de pression selon la revendication 1, **caractérisé en ce que** ladite plaque intermédiaire (24), qui comprend lesdites sièges de soupape (301, 30b), est un corps en plastique, moulé par injection en matière plastique renforcée par des fibres.

3. Ensemble de vannes de commande de pression selon la revendication 2, **caractérisé en ce que** ladite plaque intermédiaire (24) consiste en polyamide renforcé par des fibres.

4. Ensemble de vannes de commande de pression selon une quelconque des revendications précédentes, **caractérisé en ce que** lesdites sièges de soupape (30a, 30b) desdites vannes de commande électromagnétiques (15a, 15b) ont une configuration en cône et définissent des canaux de fluide centraux (32a, 32b) formés dans ladite plaque intermédiaire (24).

5. Ensemble de vannes de commande de pression selon une quelconque des revendications précédentes, **caractérisé en ce que** lesdites sièges de soupape (30a, 30b) sont formées à une surface de ladite plaque intermédiaire (24), qui se trouve en face de ladite autre partie de carter (33), dans lequel les autres composants desdites vannes de commande électromagnétiques (15a, 15b) sont logés, dont chacun comprend une armature (35a, 35b) respective, une bobine respective et un noyau magnétique respectif (40a, 40b).

6. Ensemble de vannes de commande de pression selon la revendication 5, **caractérisé en ce que** l'autre partie de carter (33), qui reçoit lesdits autres composants desdites vannes de commande électromagnétique (15a, 15b) desdites vannes de commande électromagnétique (15a, 15b), est reliée à ladite plaque intermédiaire (24), à laquelle sont formées lesdites sièges de soupape (30a, 30b).

7. Ensemble de vannes de commande de pression selon la revendication 5 ou 6, **caractérisé en ce que** ladite autre partie de carter (33) est munie des perçages traversant (34a, 34b) pour l'insertion desdits autre components desdites vannes de commande électromagnétiques (15a, 15b), dans lequel un axe central (36a, 36b) respectif d'un perçage traversant (34a, 34b) est disposé coaxialement par rapport à la siège de soupape respective (30a, 30b).

8. Ensemble de vannes de commande de pression selon la revendication 7, **caractérisé en ce que** lesdits perçages traversant (34a, 34b) dans ladite autre partie de carter (33) sont fermés par un couvercle (37).

9. Ensemble de vannes de commande de pression selon une quelconque des revendications précédentes, **caractérisé en ce qu'**il constitue un ensemble de vannes de commande de pression à un seul canal.
